# EUROPEAN PATENT APPLICATION

(11) **EP 2 000 723 A1**
(43) Date of publication of application: **10.12.2008**
(21) Application number: 07116250.7
(22) Date of filing: 12.09.2007
(51) Int. Cl.: F16L 11/11

(54) **Fluid conducting pipe having rigid sections alternating with flexible sections**

(30) Priority: 08.06.2007 EP 07109856
(71) Applicant: Plastiflex Belgium, 3583 Paal-Beringen (BE)
(72) Inventor: Diels, Domin, B-2275, Gierle (BE); van den Bulcke, Johny, B-3650, Dilsen-Stokkem (BE)
(74) Representative: Sarlet, Steven Renaat Irène

(57) **Abstract**

The invention relates to a fluid conducting pipe for use in the building industry, such as for example a drain pipe or a central vacuum cleaner pipe or the like, comprising a tubular body (1) manufactured from at least one continuous layer of plastic material. The body comprises substantially straight rigid sections (21,22,23) alternating with corrugated flexible sections (12,13). The invention further relates to a method for manufacturing such a pipe, which involves the technique of blow/vacuum moulding.

## Description

### Technical field

The present invention relates to a fluid conducting pipe for use in the building industry, i.e. on the inside and outside of buildings or in the ground for drainage of rain water, waste water, etc., such as for example a drain pipe, a central vacuum cleaner pipe or the like, according to the preamble of claim 1. The invention further relates to a method for manufacturing such a fluid conducting pipe.

### Background art

For drainage systems in house or outside nowadays rigid pipe sections in different diameters and lengths are used. Mostly these pipe sections are connected with each other by means of different types of fittings, such as for example straight ones, T-fittings, 45° fittings, 90° fittings, etc. Mostly these pipes are made in PVC with the technique of extrusion. Due to the rigidity of the pipe sections, their length is limited in view of transportability, leading to the disadvantage that multiple sections have to be connected to each other in the drainage system. This is time consuming and hence costly.

Similarly, the circuits of central vacuum cleaning systems in walls, floors, ceilings and outside the building in the ground and such are built by means of similar rigid pipe sections which are coupled by suitable elbows, fittings and the like.

Apart from that, continuous processes are known for manufacturing mostly flexible hoses. An example of such a process is blow-moulding or vacuum-moulding in which molten plastic material is supplied to an extruder, from which the molten plastic material is introduced between two rotating mould chains. The mould chains face each other and rotate in opposite directions in relation to each other. Each mould chain comprises several separate mould parts and a semicylindrical score in longitudinal direction of the mould chain, which provides the outer surface of the pipe/hose to be produced. The molten plastic material is introduced in the mould at the point where the two mould chains come together. In the case of blow-moulding, pressurised air is blown through the centre of the cylinder of plastic material, so that it expands and is urged into the semicylindrical scores in the mould parts. In the case of vacuum-moulding, the mould parts are provided with narrow gaps, which extend circumferentially and are a few tenths of a millimetre wide, through which a vacuum is created around the cylinder of plastic material, also leading to expansion of the plastic material into the mould parts. Both pressurised air and vacuum can be used together at the same time. Because of the rotation of the mould chains the pipe/hose is pulled away from the extruder along with the separate mould parts of the two mould chains. Before the mould chains reach the point where their separate mould parts come apart, the individual moulds are cooled down, so that the plastic material solidifies. Finally the rotating mould chains separate and the mould parts are removed from the hose/pipe.

For example, in US 2002/0197430 A1 a blow-moulding process is applied for manufacturing a hose with bellows portions for application in vehicle engines. The bellows portions are chosen such that the finished hose bends at the bellows portions to take on a predetermined shape.

### Disclosure of the invention

It is an aim of the present invention to provide a fluid conducting pipe with which construction of fluid conducting circuits in buildings and hence their installation costs can be reduced.

It is another aim of the present invention to provide a method for manufacturing the fluid conducting pipe of the invention.

These and other aims are achieved according to the invention with the fluid conducting pipe and the method showing the technical characteristics and steps of the independent claims.

The invention relates to a fluid conducting pipe comprising a tubular body manufactured from at least one continuous layer of plastic material. The fluid conducting pipe of the invention is characterised in that the tubular body comprises substantially straight rigid sections alternating with corrugated flexible sections. The tubular body preferably has a single layer forming these sections, but may also have other layers, such as for example an additional layer on the inside of the layer forming the flexible and rigid sections for making the inside of the corrugated sections more smooth. This additional layer may also be continuous or may be discontinuous and for example only provided inside the flexible sections. Another possible embodiment is to provide an intermediate layer between the inside layer and the outer layer in for example a regrind material or a recycled material.

As used herein, with a "continuous layer" of plastic material is meant that the material is continuous in both longitudinal and circumferential directions and free of welding seams, i.e. resulting from a continuous manufacturing process such as for example blow/vacuum-moulding. An alternative definition could be a "unitary tubular layer".

With the fluid conducting pipe of the invention, bends in the circuit of a drainage system can be achieved simply by bending the fluid conducting pipe, so there is no longer a need to connect two straight rigid sections to each other by means of a curved intermediate part like in the prior art. As a result, installation time and costs can be saved.

Furthermore, the fluid conducting pipe of the invention can be manufactured in a continuous process up to a substantially indefinite length and can be rolled up. As a result, the fluid conducting pipe can be stored and transported in the form of rolls, which can involve an additional cost reduction from the viewpoint of logistics.

In embodiments where the pipe of the invention is intended for use in a drainage system in which waste water is to be conducted, the pipe needs to have a given strength to avoid collapse of the pipe after installation in the drainage system. Similarly, in embodiments where the pipe of the invention is intended for use in a central vacuum cleaner system in which an air stream is to be conducted, the pipe needs to have a given strength to be able to withstand the occurring pressure differences. In general, it has to be made sure that the wall thickness of the continuous layer forming the rigid and flexible sections is sufficient for being able to withstand a given force, which can for example be imposed by a norm. For example, from the difference in technical field it is evident that the small pipes like the one which is known from US 2002/0197430 A1 do not meet this requirement and are not suitable for use in fluid conducting circuits in buildings.

In a preferred embodiment of the pipe of the invention, the rigid sections have a greater wall thickness than the flexible sections. Such for example results by manufacturing the pipe by means of a blow/vacuum-moulding process in which a substantially constant extrusion speed and a substantially constant rotation speed of the mould chains are maintained. The wall thickness is thereby reduced at the corrugated parts, even though the speeds are kept constant, in view of the fact that the outer surface by the corrugated shape is relatively longer than at the straight, rigid parts. So this embodiment has the advantage that it can be easily manufactured, since for example in the case of blow/vacuum moulding there is no need to vary the speeds. However, the speeds may be varied in alternative embodiments too.

In a preferred embodiment of the fluid conducting pipe according to the invention, the flexible sections have an internal diameter which is substantially equal to that of the rigid sections. This means that the passage at the inside of the fluid conducting pipe has a substantially continuous cross-section, i.e. does not narrow at the corrugated sections, so that the flow of liquid through the pipe in use is substantially not hampered by the corrugated sections.

In a preferred embodiment of the fluid conducting pipe according to the invention, the flexible sections have a predetermined length which is chosen such with respect to the diameter of the flexible sections that a bend of at least 90° can be achieved. This is advantageous since bends of 90° often occur in drainage systems of buildings. Preferably, the length of the flexible sections is greater than or equal to their diameter. This ratio of length/diameter can ensure that the flexible sections are long enough for achieving a desired flexibility. Preferably, the length of the flexible sections is between one and a half and three times their diameter. This means that they are also not made too long, which could affect the overall strength of the pipe.

In a preferred embodiment of the fluid conducting pipe according to the invention, the rigid sections have a predetermined length which is chosen in function of a desired overall strength of the pipe. This means that the length of the rigid sections is preferably chosen such that they make up the majority of the length of the fluid conducting pipe of the invention, so that sufficient strength can be ensured. In other words, it is preferred that the rigid sections are longer than the flexible sections. Preferably, the length of the rigid sections is greater than or equal to their diameter, more preferably at least twice their diameter.

The diameter (=the outer diameter of the rigid sections) of the fluid conducting pipe of the invention is preferably a diameter which is common for fluid conducting pipes in the market, preferably at least 30 mm, for example about 32, 40, 50, 90, 100, 110 or 125 mm.

In a preferred embodiment of the fluid conducting pipe according to the invention, the fluid conducting pipe is provided with a coupling piece on at least one of its ends, the coupling piece being integrally moulded with the body. This means that the coupling piece, which is provided for coupling the fluid conducting pipe to a subsequent part of the drainage system, is preferably unitary with the tubular body and results from specific measures in the continuous manufacturing process, i.e. for example specific mould parts in the mould chain of a blow/vacuum-moulding process, so that the coupling piece is formed directly on the end of the fluid conducting pipe. The coupling piece is preferably shaped such that it is complementary with existing fittings.

In a preferred embodiment, the coupling piece comprises a widened part with an internal annular recess for holding a sealing ring, the internal diameters of which are chosen such that the coupling piece snugly fits around a rigid section of a subsequent pipe. Since the rigid sections have the same dimensions, this has the advantage that the coupling piece is complementary to each of the rigid sections, so that the subsequent pipe can be cut short if necessary by cutting off one or more sections without affecting its ability to be connected to the previous pipe.

In alternative embodiments, the fluid conducting pipe of the invention may also be provided with complementary male and female parts at its opposite ends, with snap-fitting connecting rings/recesses or the like.

In a preferred embodiment of the fluid conducting pipe according to the invention, the fluid conducting pipe is provided with length markings on its outside. This can help the installers to cut off the fluid conducting pipe at the exact length. The application of these markings on the fluid conducting pipe can be easily integrated in the blow/vacuum-moulding process by means of suitable engravings or shapes in the mould parts of the mould chains.

In a preferred embodiment of the fluid conducting pipe according to the invention, at least one of the flexible sections is formed by an extensible concertina-type hinge. This type of hinges is well-known from the field of drinking straws. The extensible concertina-type hinge has the advantage that it maintains its shape once it is bent to a certain angle. Furthermore, the inclusion of one or more of such hinges in this embodiment of the fluid conducting pipe has the advantage that the pipe can be extended to a certain extent, which is convenient if upon installation it appears that the pipe is a few centimetres too short.

The fluid conducting pipe of the invention is preferably manufactured by means of a blow/vacuum-moulding process, comprising the steps of (a) extruding a tube of molten plastic material between two rotating mould chains comprising multiple mould parts with longitudinal scores which come together for forming the outside of the fluid conducting pipe, (b) expanding the tube of molten plastic material by means of a pressure difference between the outside of and the inside of the tube, such that the molten plastic material is urged into the longitudinal scores in the mould parts, (c) cooling the mould parts before removal from the formed fluid conducting pipe.

Preferably, the rigid and flexible parts are formed by means of separate mould parts, since this facilitates manufacturing the mould parts. In other words, it is preferred that the mould chains comprise first mould parts shaped for forming the rigid sections and second mould parts shaped for forming the flexible sections, each chain having a sequence of one or more first mould parts alternating with a sequence of one or more second mould parts. As mentioned above, one or more specific mould parts may be added in each of the mould chains for shaping a coupling piece integrally with the body of the fluid conducting pipe.

As mentioned above, the extrusion speed and the rotation speed of the mould chains are substantially constant, since this simplifies control of the process and can simultaneously achieve that the straight and corrugated sections are made with different wall thicknesses, such that they are respectively rigid and flexible.

As mentioned above, the fluid conducting pipe of the invention is preferably stored on a roll, which is possible by the presence of the flexible sections and has advantages from the viewpoint of logistics.

In a preferred embodiment, the method further comprises the step of co-extruding an inner tube of molten plastic for forming a smooth additional layer at least on the inside of the flexible sections. When this layer is provided inside the flexible sections only, extrusion of the inner tube is started and stopped in synchronisation with passage of the second mould parts forming the flexible sections.

### Brief description of the drawings

The invention will be further elucidated by means of the following description and the appended figures.

Figure 1 shows a perspective view of an embodiment of the fluid conducting pipe of the invention, with part of the wall broken away to show the interior of the pipe.

Figure 2 shows a perspective view of an embodiment of a process for manufacturing the fluid conducting pipe of figure 1.

Figures 3 and 4 show a perspective view of another embodiment of the fluid conducting pipe of the invention, comprising a coupling piece. In these figures the pipes are cut in half to show the interior and the coupling is shown in an enlarged view.

Figure 5 shows a cross-sectional view of another preferred embodiment of the fluid conducting pipe of the invention.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

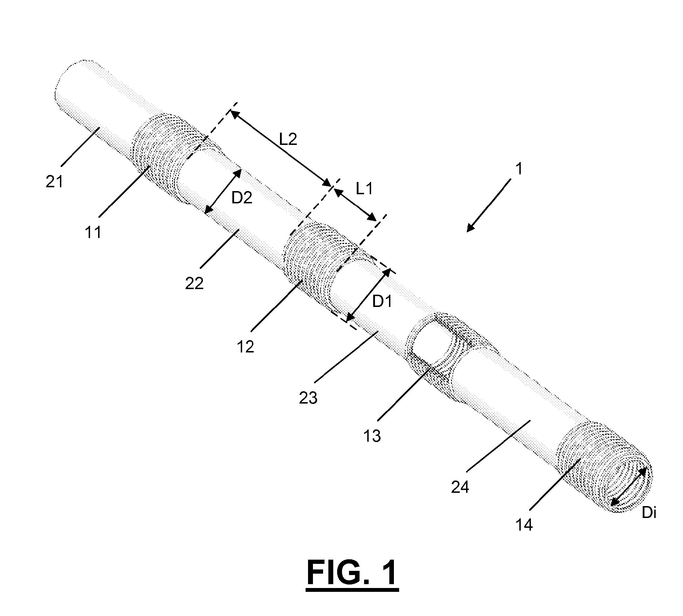

The fluid conducting pipe shown in figure 1 is intended for use in fluid conducting circuits in the building industry, i.e. domestic or industrial buildings, also outside buildings in the ground or above the ground for example drainage circuits or central vacuum cleaner circuits or the like. The pipe comprises a tubular body 1, which is preferably symmetrical around its longitudinal axis, comprising substantially straight rigid sections 21-24 alternating with corrugated flexible sections 11-14. The tubular body 1 is manufactured from a single continuous layer of plastic material, which forms these sections. In alternative embodiments (not shown), the body 1 may also have other layers, such as for example an additional layer on the inside of the layer forming the flexible and rigid sections for making the inside of the corrugated sections 11-14 more smooth.

In cross section, the pipe of figure 1 has a circular shape. Alternatively, the shape may for example also be oval or polygonal or any other shape deemed suitable by the person skilled in the art. The corrugated sections may also be spirally wound as is common for corrugated blow-moulded hoses. The internal diameter of the pipe of figure 1 is substantially continuous, but may also be varied in alternative embodiments.

With the fluid conducting pipe of figure 1, bends in the fluid conducting circuit in or around a building or in the ground can be achieved simply by bending the fluid conducting pipe 1, so there is no longer a need to connect two straight rigid sections to each other by means of a curved intermediate part like in the prior art. As a result, installation time and costs can be saved.

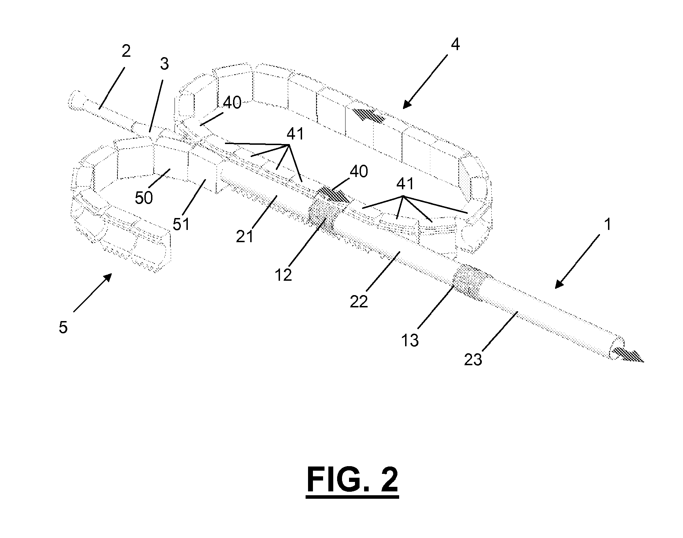

Furthermore, the fluid conducting pipe of figure 1 can be manufactured in a continuous process, such as for example the process shown in figure 2, up to a substantially indefinite length and can be rolled up. As a result, the fluid conducting pipe can be stored and transported in the form of rolls, which can involve an additional cost reduction from the viewpoint of logistics.

In embodiments where the pipe of figure 1 is intended for use in a drainage system in which waste water is to be conducted, the pipe needs to have a given strength to avoid collapse of the pipe after installation in the drainage system. Similarly, in embodiments where the pipe of figure 1 is intended for use in a central vacuum cleaner system in which an air stream is to be conducted, the pipe needs to have a given strength to be able to withstand the occurring pressure differences. In general, it has to be made sure that the wall thickness of the continuous layer forming the rigid and flexible sections is sufficient for being able to withstand a given force, which can for example be imposed by a norm. For example, in case the pipe is manufactured in PVC or PP, suitable wall thicknesses for the rigid sections are 1.2 mm, 1.8 mm, 2 mm, 3 mm and 3.2 mm.

In the pipe of figure 1, the rigid sections 21-24 have a greater wall thickness than the flexible sections 11-14. Such for example results by manufacturing the pipe by means of the blow/vacuum-moulding process of figure 2 in which a substantially constant extrusion speed and a substantially constant rotation speed of the mould chains 4, 5 are maintained. The wall thickness is thereby reduced at the corrugated parts 11-14, even though the speeds are kept constant, in view of the fact that the outer surface by the corrugated shape is relatively longer than at the straight, rigid parts 21-24. This shows that the pipe can be easily manufactured, since in the case of the blow/vacuum moulding process of figure 2 there is no need to vary the speeds. However, the speeds may be varied in alternative embodiments too.

In the embodiment of the fluid conducting pipe of figure 1, the flexible sections 11-14 have an internal diameter Di which is substantially equal to that of the rigid sections 21-24. This means that the passage at the inside of the fluid conducting pipe 1 has a substantially continuous cross-section, i.e. does not narrow at the corrugated sections 11-14, so that the flow of liquid through the pipe in use is substantially not hampered by the corrugated sections.

In the embodiment of the fluid conducting pipe of figure 1, the flexible sections have a predetermined length L1 which is chosen such with respect to the diameter D1 of the flexible sections that a bend of at least 90° can be achieved. This is advantageous since bends of 90° often occur in drainage systems of buildings. In the embodiment of figure 1 the length L1 of the flexible sections 11-14 is slightly greater than their diameter D1. This ratio of length/diameter L1/D1 can ensure that the flexible sections are long enough for achieving the desired flexibility. In other preferred embodiments of pipes according to figure 1 the length of the flexible sections is between one and a half and three times their diameter. This means that they are also not made too long, which could affect the overall strength of the pipe.

In the embodiment of the fluid conducting pipe of figure 1, the rigid sections 21-24 have a predetermined length L2 which is chosen in function of a desired strength of the pipe. This means that the length L2 of the rigid sections 21-24 is preferably chosen such that they make up the majority of the length of the fluid conducting pipe 1, so that sufficient strength can be ensured. As shown, it is preferred that the rigid sections 21-24 are longer than the flexible sections 11-14. In the embodiment of figure 1, the length L2 of the rigid sections is much greater than their diameter D2. In other preferred embodiments of pipes according to figure 1 the length of the rigid sections is at least twice their diameter.

The diameter (= the outer diameter of the rigid sections) of the fluid conducting pipe of figure 1 is preferably a diameter which is common for fluid conducting pipes in the market, preferably at least 30 mm, for example about 32, 40, 50, 90, 100, 110 or 125 mm. However, it is evident that other diameters are also possible.

In other preferred embodiments (not shown) the fluid conducting pipe can be provided with length markings on its outside. This can help the installers to cut off the fluid conducting pipe at the exact length. The application of these markings on the fluid conducting pipe can be easily integrated in the blow/vacuum-moulding process of figure 2 by means of suitable engravings or shapes in the mould parts of the mould chains 4, 5.

The fluid conducting pipe 1 can be manufactured by means of the blow/vacuum-moulding process of figure 2. This comprises the following steps. A tube 3 of molten plastic material is extruded from a die 2 between two rotating mould chains 4, 5 comprising multiple mould parts 40-41, 50-51 with longitudinal scores which come together for forming the outside of the fluid conducting pipe 1. The tube 3 of molten plastic material is expanded by means of a pressure difference between the outside of and the inside of the tube, such that the molten plastic material is urged into the longitudinal scores in the mould parts 40-41, 50-51. The mould parts are cooled before removal from the formed fluid conducting pipe 1.

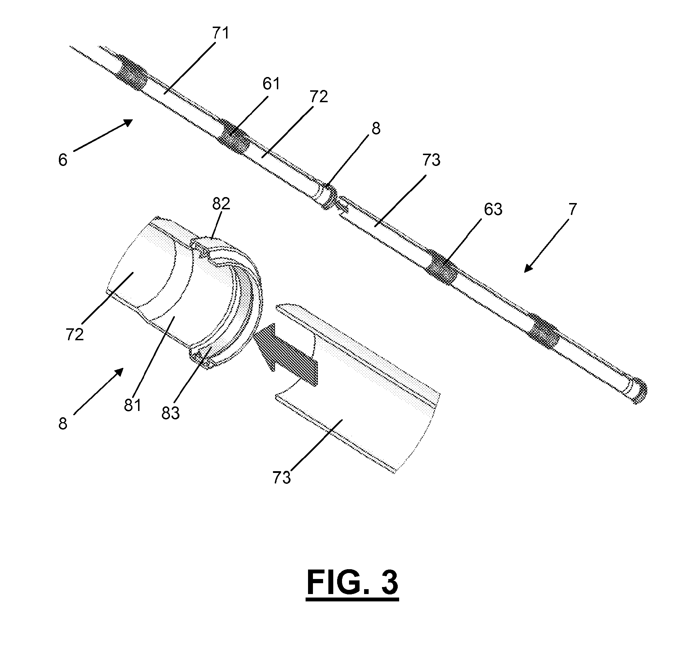

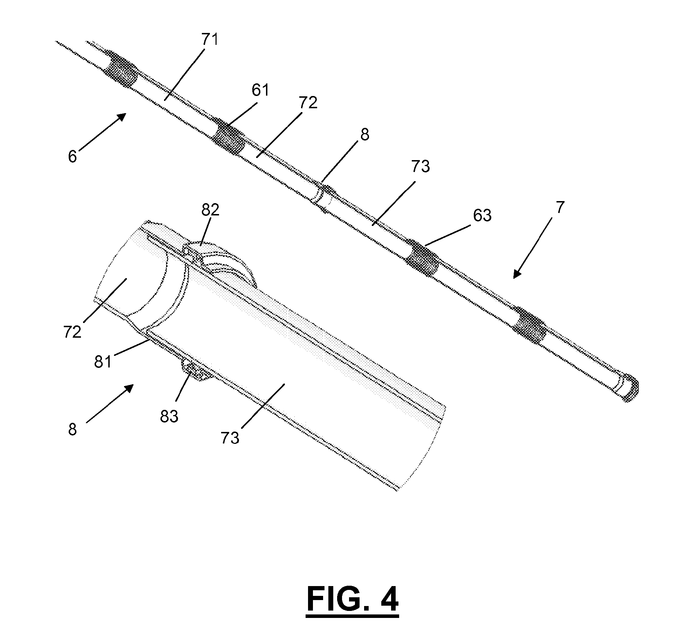

As shown, the rigid and flexible parts of the fluid conducting pipe 1 are formed by means of separate mould parts, since this facilitates manufacturing the mould parts themselves. In figure 2, the mould chains 4 and 5 respectively comprise first mould parts 41, 51 shaped for forming the rigid sections 21-24 and second mould parts 40, 50 shaped for forming the flexible sections 11-14. Each chain 4, 5 has a sequence of four first mould parts 41 alternating with one second mould part 40, 50. One or more specific mould parts may be added in each of the mould chains 4, 5 for shaping a coupling piece 8 integrally with the body 6, 7 of the fluid conducting pipe, like in the embodiment of figures 3 and 4..

As mentioned above, the extrusion speed of the tube 3 at the die 2 and the rotation speed of the mould chains 4, 5 are substantially constant, since this simplifies control of the process and can simultaneously achieve that the straight and corrugated sections are made with different wall thicknesses, such that they are respectively rigid and flexible.

The fluid conducting pipe 1 of figures 1 and 2 is preferably stored on a roll, which is possible by the presence of the flexible sections 11-14 and has advantages from the viewpoint of logistics.

In a preferred embodiment (not shown), the process of figure 2 may further comprise the co-extrusion of an inner tube of molten plastic for forming a smooth additional layer at least on the inside of the flexible sections 11-14. When this layer is provided inside the flexible sections only, extrusion of the inner tube is started and stopped in synchronisation with passage of the second mould parts 40, 50 forming the flexible sections 11-14.

In the preferred embodiment of figures 3 and 4, the fluid conducting pipe is provided with a coupling piece 8 on one of its ends, the coupling piece 8 being integrally moulded with the body 6, 7 and being complementary to the other end of the body 6, 7 which is formed by one of the straight rigid sections 73. Figures 3 and 4 show respectively two fluid conducting pipes 6, 7 are connected to each other by means of this coupling piece 8. The coupling piece 8 is unitary with the tubular body 6, 7 and results from specific measures in the continuous manufacturing process, i.e. for example specific mould parts in the mould chains 4, 5 of the blow/vacuum-moulding process of figure 2, so that the coupling piece 8 is formed directly on the end of the fluid conducting pipe without needing an additional process step.

In the embodiment shown in figures 3 and 4, the coupling piece 8 comprises a widened part 81 with an internal annular recess 82 for holding a sealing ring 83. The internal diameter of the widened part 81 and the sealing ring 83 are chosen such that the coupling piece snugly fits around the rigid section 73 of the subsequent pipe 7. Since the rigid sections 71, 72, 73 all have the same dimensions, the coupling piece 8 is complementary to each of these, so that the subsequent pipe 7 can be cut short if necessary, by cutting off one or more sections or part of section 73.

In alternative embodiments (not shown), the fluid conducting pipe of the invention may also be provided with complementary male and female parts at its opposite ends, with snap-fitting connecting rings/recesses or the like.

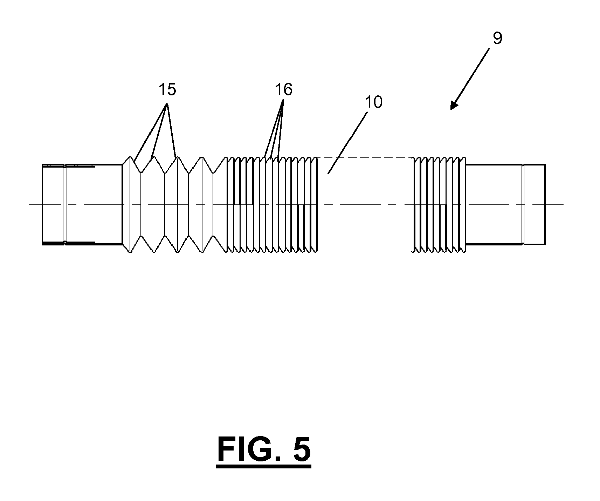

In the preferred embodiment of the fluid conducting pipe 9 shown in figure 5, at least one of the flexible sections is formed by an extensible concertina-type hinge 10. This type of hinges, which is well-known from the field of drinking straws, comprises a plurality of corrugations of which the upstanding legs are in such a way different that the corrugations can collapse into each other. As a result of this, each of the corrugations is extensible and bendable, while it substantially maintains the shape it is given. In figure 5, some of the corrugations 15 are shown in extended state whereas others 16 are shown in the collapsed state.

The use of this extensible concertina-type hinge 10 has the advantage that the corrugated section maintains its shape once it is bent to a certain angle. Furthermore, the fluid conducting pipe 9 can be extended to a certain extent, which is convenient if upon installation it appears that the pipe is a few centimetres too short.

The material of the pipe 9 is one of the factors which influences the strength which is needed for extending/collapsing the corrugations of the hinge 10. The material may for example be PP, but other materials known to the person skilled in the art are also possible, such as for example PVC, PE, ABS, PA, ...

## Claims

1. A fluid conducting pipe for use in the building industry, such as for example a drain pipe or a central vacuum cleaner pipe or the like, comprising a tubular body manufactured from at least one continuous layer of plastic material, **characterised in that** the body comprises substantially straight rigid sections alternating with corrugated flexible sections.

2. A fluid conducting pipe according to claim 1, **characterised in that** the rigid sections have a greater wall thickness than the flexible sections.

3. A fluid conducting pipe according to claim 1 or 2, **characterised in that** the flexible sections have an internal diameter which is substantially equal to that of the rigid sections.

4. A fluid conducting pipe according to any one of the previous claims, **characterised in that** the flexible sections have a predetermined length which is chosen such with respect to the diameter of the flexible sections that a bend of at least 90° can be achieved.

5. A fluid conducting pipe according to claim 4, **characterised in that** the length of the flexible sections is greater than or equal to their diameter.

6. A fluid conducting pipe according to claim 4, **characterised in that** the length of the flexible sections is between one and a half and three times their diameter.

7. A fluid conducting pipe according to any one of the previous claims, **characterised in that** the rigid sections have a predetermined length which is chosen in function of a desired strength of the pipe.

8. A fluid conducting pipe according to claim 7, **characterised in that** the length of the rigid sections is greater than or equal to their diameter.

9. A fluid conducting pipe according to claim 7, **characterised in that** the length of the rigid sections is at least twice their diameter.

10. A fluid conducting pipe according to any one of the previous claims, **characterised in that** the rigid sections are longer than the flexible sections.

11. A fluid conducting pipe according to any one of the previous claims, **characterised in that** the diameter of the body is about 32, 40, 50, 90, 100, 110 or 125 mm.

12. A fluid conducting pipe according to any one of the previous claims, **characterised in that** the fluid conducting pipe is provided with a coupling piece on at least one of its ends, the coupling piece being integrally moulded with the body.

13. A fluid conducting pipe according to claim 12, **characterised in that** the coupling piece comprises a widened part with an internal annular recess for holding a sealing ring, the internal diameters of which are chosen such that the coupling piece snugly fits around a rigid section of a subsequent pipe.

14. A fluid conducting pipe according to any one of the previous claims, **characterised in that** the fluid conducting pipe is provided with length markings on its outside.

15. A fluid conducting pipe according to any one of the previous claims, **characterised in that** the tubular body comprises an additional layer on the inside of the layer forming the flexible and rigid sections for making the inside of the corrugated flexible sections more smooth.

16. A fluid conducting pipe according to claim 15, **characterised in that** the additional layer is discontinuous and only provided inside the flexible sections.

17. A fluid conducting pipe according to any one of the previous claims, **characterised in that** at least one of the flexible sections is formed by an extensible concertina-type hinge.

18. A method for manufacturing a fluid conducting pipe according to any one of the previous claims, comprising the steps of
a) extruding a tube of molten plastic material between two rotating mould chains comprising multiple mould parts with longitudinal scores which come together for forming the outside of the fluid conducting pipe,
b) expanding the tube of molten plastic material by means of a pressure difference between the outside of and the inside of the tube, such that the molten plastic material is urged into the longitudinal scores in the mould parts,
c) cooling the mould parts before removal from the formed fluid conducting pipe.

19. A method according to claim 18, **characterised in that** the mould chains comprise first mould parts shaped for forming the rigid sections and second mould parts shaped for forming the flexible sections, each chain having a sequence of one or more first mould parts alternating with a sequence of one or more second mould parts.

20. A method according to claim 18 or 19, **characterised in that** each of the mould chains comprises at least one mould part for forming a coupling piece integrally with the body of the fluid conducting pipe.

21. A method according to any one of the claims 18-20, **characterised in that** the extrusion speed and the rotation speed of the mould chains are substantially constant.

22. A method according to any one of the claims 18-21, further comprising the step of storing the fluid conducting pipe on a roll.

23. A method according to any one of the claims 18-22, further comprising the step of co-extruding an inner tube of molten plastic for forming a smooth additional layer at least on the inside of the flexible sections.

24. A method according to claim 23, **characterised in that** extrusion of the inner tube is started and stopped in synchronisation with passage of the second mould parts forming the flexible sections.
